# FASCICULE DE BREVET EUROPEEN

(11) **EP 2 773 550 B1**
(45) Date de publication et mention de la délivrance du brevet: **11.03.2020**
(21) Numéro de dépôt: 12780190.0
(22) Date de dépôt: 30.10.2012
(51) Int. Cl.: B62D 25/08, B60K 11/08, B62D 63/02

(54) **GUIDE D'AIR STRUCTUREL A CONFIGURATIONS MULTIPLES D'UNE FACE AVANT TECHNIQUE D'UN VEHICULE AUTOMOBILE ET VEHICULE AINSI EQUIPE**
STRUKTURELLE LUFTFÜHRUNG MIT MEHREREN KONFIGURATIONEN FÜR EINE TECHNISCHE VORDERFLÄCHE EINES KRAFTFAHRZEUGS UND FAHRZEUG DAMIT
STRUCTURAL AIR GUIDE HAVING MULTIPLE CONFIGURATIONS FOR A TECHNICAL FRONT SURFACE OF A MOTOR VEHICLE AND VEHICLE COMPRISING SAME

(30) Priorité: 02.11.2011 FR 1159927
(43) Date de publication de la demande: 10.09.2014
(73) Titulaire: Renault S.A.S., 92100 Boulogne-Billancourt (FR)
(72) Inventeur: BERTHEVAS, Fabrice, F-91940 Gometz Le Chatel (FR); FLANDIN, Michael, F-28410 Broue (FR); BIGNON, Yannick, F-92350 Le Plessis Robinson (FR)
(86) Numéro de dépôt international: PCT/EP2012/071463
(87) Numéro de publication internationale: WO 2013/064488

(56) Documents cités:
- EP-A1- 1 216 872
- EP-A2- 2 248 693
- DE-A1-102004 026 419
- FR-A1- 2 950 574
- FR-A1- 2 967 375
- JP-A- 2004 299 446
- US-A1- 2007 068 716

## Description

La présente invention concerne un agencement modulaire de face avant technique de véhicule et plus précisément un guide d'air structurel à fonction de face avant technique de moteur de véhicule automobile. Il s'agit de canaliser l'air pénétrant par au moins une ouverture ou grille d'aération dans la façade avant ou peau de bouclier avant du véhicule pour le conduire à un ensemble d'éléments regroupés dans ce qu'on appelle une « valise de refroidissement ». Par ce terme, on désigne l'ensemble des éléments nécessaires au refroidissement du moteur, parfois empilés en couches ou en partie superposés ; la valise de refroidissement se compose classiquement du radiateur à eau de refroidissement moteur, du RAS optionnel (refroidissement de radiateur turbo) et du condenseur.

On appelle dans le métier « face avant technique » (FAT) une structure qui se trouve en avant du bloc moteur et qui a pour fonction de supporter différents organes, principalement le radiateur du bloc moteur.. La FAT peut prendre de multiples formes. Dans certains cas, elle se réduit à une simple poutre transversale. Dans d'autres cas, elle constitue un châssis de forme plus ou moins complexe intégrant la valise de refroidissement. La FAT intègre différents fonctions telles que support de butées de capot, support de serrure de capot ou d'un jambage supportant la serrure de capot, etc.

On connaît par le document EP 1813485 une face avant technique destinée à être intégrée à l'avant d'un véhicule dans un compartiment moteur dudit véhicule, derrière au moins une grille d'aération d'une façade avant du véhicule, la face avant technique étant sous forme d'une structure sensiblement rectangulaire comprenant notamment une face avant, une face arrière, et une bordure supérieure, ladite structure intégrant au moins un radiateur et comprenant des moyens de fixation à la structure du véhicule. Le document FR2950574A1 montre une ensemble comportant un guide d'air structurel et une valise de refroidissement présentant les caractéristiques du préambule de la revendication 1.

Un inconvénient de l'agencement de FAT connu par ce document est de ne pas réaliser un guidage adéquat de l'air depuis la grille d'aération jusqu'au radiateur. Un autre inconvénient est que cet agencement est spécifique à un modèle de véhicule et qu'il faut autant de modèles d'agencement qu'il y a de modèles de véhicules.

Le but de l'invention est de proposer un agencement de FAT qui pallie ces inconvénients et permette d'obtenir un bon guidage et confinement d'air tout en proposant une standardisation partielle de l'agencement sur plusieurs véhicules d'une même gamme.

L'invention atteint son but grâce à un ensemble comportant un guide d'air structurel et une valise de refroidissement, le guide d'air structurel étant destiné à être intégré à l'avant d'un véhicule dans un compartiment moteur dudit véhicule, derrière au moins une ouverture d'aération d'une façade avant du véhicule, le guide d'air étant sous forme d'une structure sensiblement rectangulaire comprenant notamment une face avant, une face arrière, et une bordure supérieure, ladite structure intégrant au moins un radiateur et comprenant des moyens de fixation à la structure du véhicule, la face avant comprend une zone de fixation destinée à la fixation d'au moins un module de guidage d'air adaptatif apte à conduire l'air depuis l'ouverture d'aération jusqu'à ladite face avant, la face arrière forme un logement de réception de la valise de refroidissement comprenant au moins ledit radiateur, la valise étant équipée de moyens d'étanchéité coopérant avec le logement de réception, la bordure supérieure comprend au moins une zone de fixation de modules d'équipement de face avant technique.

Le logement de réception de la valise de refroidissement situé à l'arrière du guide d'air structurel peut recevoir la valise dans l'une ou l'autre d'au moins deux positions, respectivement avancée ou reculée. L'ensemble se caractérise par le fait que la valise comporte une enveloppe ou manchon en matière plastique dont le bord avant est conformé en joint, notamment à lèvre articulée, une surface intérieure du logement de réception comporte un épaulement périphérique coopérant avec le joint porté par la valise de refroidissement pour réaliser l'étanchéité quelle que soit la position de la valise.

Ainsi, grâce à cette constitution, la partie de guide d'air structurel peut facilement être standardisée pour plusieurs véhicules d'une même gamme, l'adaptation spécifique au modèle concerné ne se faisant qu'au niveau du module de guide d'air adaptatif fixé à l'avant du guide d'air structurel standard, au niveau des équipements modulaires de face avant technique venant sur la bordure supérieure, et au niveau de la valise de refroidissement elle-même qui vient se loger dans le logement de réception du guide d'air. La position avancée de la valise permet son adaptation à des véhicules dont le moteur et des équipements connexes sont particulièrement encombrants et nécessitent de la place. La position reculée de la valise permet au contraire une adaptation à des moteurs et équipements moins encombrants à l'arrière de la face avant technique, qui nécessitent moins de place, ce qui permet de favoriser le recul de la valise et de privilégier les performances du véhicules en terme de réparabilité. En effet quand l'encombrement limité du moteur permet de placer la valise de refroidissement suffisamment en arrière du guide d'air, celle-ci se trouve donc plus reculée à l'arrière de la poutre de choc et est de ce fait moins exposée à des dommages en cas de choc Danner.

Avantageusement, la bordure supérieure du guide d'air structurel est conformé en poutre transversale, c'est-à-dire qu'elle est dotée d'une capacité de support transversal, notamment au cas où elle porte la valise de refroidissement (ce qui est une option, l'autre option étant de soutenir la valise de refroidissement par la traverse sous radiateur). La structure de poutre peut notamment être obtenue par une structure en treillis avec une ensemble de nervures et/ou de cloisons.

Avantageusement, la zone de fixation prévue sur la bordure supérieure du guide d'air structurel comprend plusieurs zones d'accueil et de fixation des équipements de FAT, notamment au milieu et aux extrémités de la bordure. En partie centrale, on vient typiquement fixer un jambage pour une serrure de capot, ledit jambage pouvant éventuellement prendre appui sur une poutre de choc située transversalement juste devant le guide d'air structurel. Sur les bords latéraux, on fixe par exemple des supports de butée de capot. Ces éléments modulaires sont adaptés à chaque modèle de la gamme de véhicules et viennent se fixer avantageusement par une simple coopération de forme (indexation) et un vissage.

Avantageusement, l'ensemble comprend un module de guidage d'air adaptatif est constitué d'au moins un caisson rigide ou convergent fixé sur le guide d'air structurel ; de préférence, ils comportent vers l'avant une bord souple périphérique assurant le contact étanche et adaptable avec le bouclier avant du véhicule. La fixation du caisson sur la face avant de la FAT se fait avantageusement pas indexation et vissage. Pour tenir compte de la poutre de choc qui barre généralement l'avant de la FAT, on prévoit de préférence au moins deux caissons respectivement supérieur et inférieur de guidage d'air adaptatif, disposés de part et d'autre de ladite poutre de choc. Chacun des caissons est fixé sur la face avant du guide d'air structurel autour d'une ouverture supérieure ou inférieure qui y est formée.

Avantageusement, l'une desdites ouvertures peut recevoir, en option, une cassette de volets pivotants pilotés pour réguler le flux d'air à travers ladite ouverture. Avantageusement, la cassette à volets d'occultation est disposée dans l'ouverture inférieure, parce que c'est en principe l'entrée d'air principale, et ce, sensiblement à l'aplomb de la poutre de choc, ce qui lui assure une bonne résistance aux chocs, notamment aux chocs avant à moins de 16 km/h (chocs Danner).

Une surface intérieure du logement de réception coopère avec un joint porté par la valise de refroidissement pour réaliser l'étanchéité. Le logement de réception est avantageusement sous forme d'un caisson de section rectangulaire et il comporte de préférence à l'avant un épaulement périphérique servant de butée au joint porté la valise de refroidissement. Ce joint est de préférence formé sur une enveloppe ou manchon entourant la valise de refroidissement, par exemple sous forme d'une lèvre articulée à l'avant de ladite enveloppe.

L'invention concerne également un véhicule automobile pourvu d'un ensemble ayant tout ou partie des caractéristiques précédentes.

Enfin l'invention concerne une gamme d'au moins deux véhicules différents du type ci-dessus mentionné, caractérisée par un guide d'air structurel identique pour les véhicules de modèles différents mais au moins un module de guidage d'air adaptatif et/ou un module d'équipement de face avant technique différent. Une telle gamme peut par exemple rassembler les divers modèles de berline tandis qu'une autre gamme rassemblera les modèles de type monospace. À l'intérieur d'une gamme, les différents modèles ont le même guide d'air structurel et ne diffèrent que par les interfaces spécifiques entre ledit guide d'air et l'environnement (carrosserie, moteur).

D'autres caractéristiques et avantages de l'invention ressortiront de la description suivante de plusieurs exemples de réalisation. Il sera fait référence aux dessins annexés sur lesquels :
- la figure 1 est une vue en perspective en écorché de l'avant d'un véhicule classique,
- la figure 2 est une vue en perspective du guide d'air structurel conforme à l'invention et, en éclaté, de ses équipements modulaires de face avant technique,
- la figure 3 représente le même guide d'air structurel avec ses équipements modulaires de face avant technique en position, et, en éclaté, les guides d'air modulaires d'adaptation,
- la figure 4 représente le même guide d'air structurel avec ses équipements modulaires de face avant technique et les guides d'air modulaires d'adaptation en position,
- la figure 5 est une vue en éclaté du guide d'air structurel de l'invention et des ses éléments modulaires, ainsi que de la caisse du véhicule dans laquelle il s'intègre,
- la figure 6 est une vue schématique en coupe longitudinale du dispositif de l'invention avec la valise de refroidissement dans une première position,
- la figure 7 est une vue schématique en coupe longitudinale du dispositif de l'invention avec la valise de refroidissement dans une seconde position, et
- la figure 8 est une vue schématique montrant l'étanchéité de la valise de refroidissement dans le guide d'air structurel de l'invention.

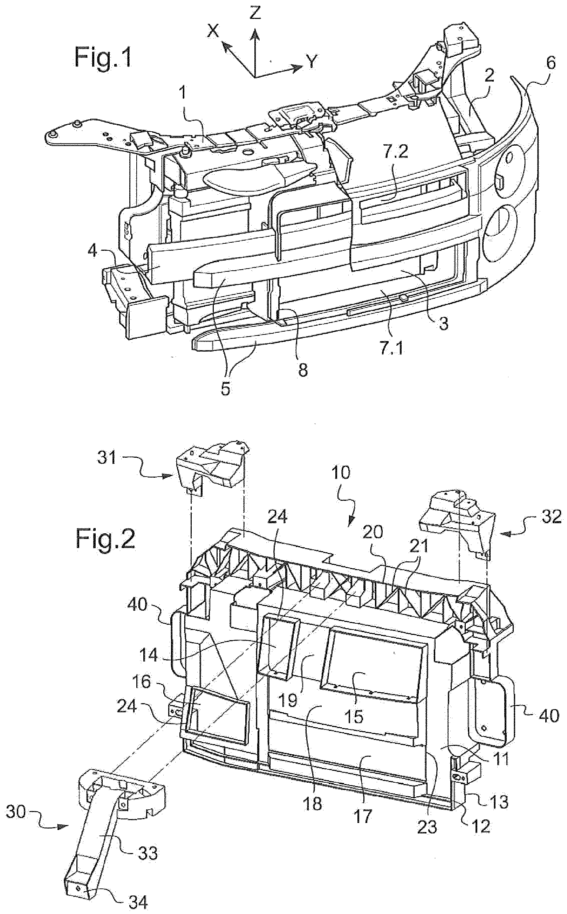

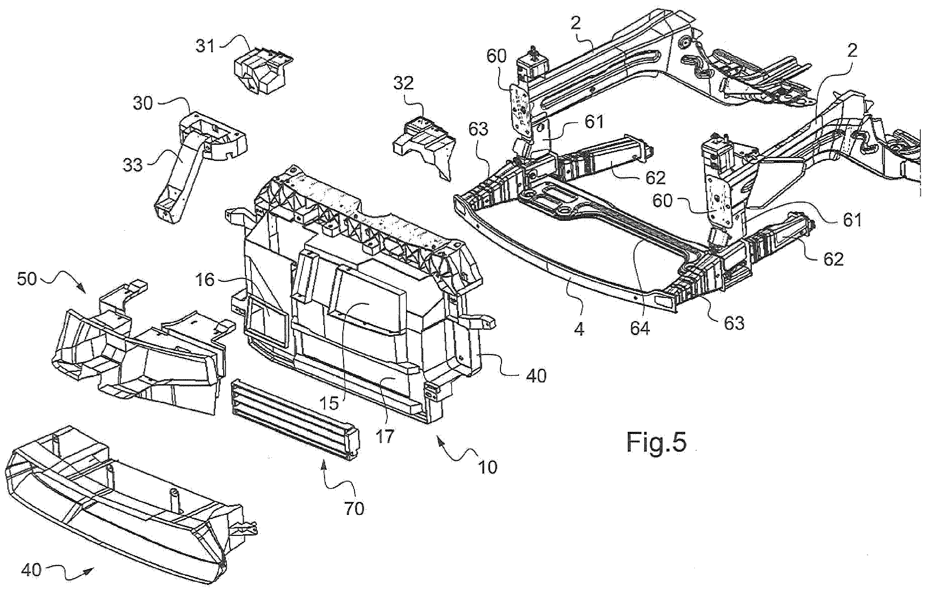

La figure 1 illustre des notions générales. On y voit un compartiment moteur à l'avant d'un véhicule d'un type classique. D'arrière en avant, on trouve :
- la façade technique avant (FAT) 1 servant de support vertical structurel à un certain nombre d'organes (notamment les butées de capot, le support de serrure capot, etc.) et fixée solidement sur des éléments structurels du châssis, par exemple sur des pièces liées aux longerons latéraux 2.
- le radiateur vertical 3, qui peut être fixé avec débattement sur la façade technique avant 1 (laquelle est alors porteuse) ou à une traverse inférieure (traverse sous radiateur) non représentée sur la figure 1 (mais visible en 64 sur la figure 5 qui représente l'agencement particulier de l'invention).
- la poutre de choc 4, transversale et reliée de manière non représentée à des éléments structurels du châssis, en principe l'avant des longerons 2. La poutre de choc barre l'espace avant du radiateur 3.
- l'absorbeur de choc 5 du bouclier 6, ici sous forme de deux profilés transversaux inférieur et supérieur. Le profilé supérieur est situé ici devant la poutre de choc 4. Le bouclier 6 comporte comme il est usuel une façade avant, des crosses latérales, et une partie inférieure de spoiler qui se prolonge en arrière sous l'avant du véhicule.

Dans le bouclier 6, une ouverture (au moins), et ici deux ouvertures 7.1 et 7.2, éventuellement munies de grilles, permettent l'entrée de l'air de refroidissement qui est ensuite dirigé vers le radiateur 3 par un guide d'air adapté 8. En pratique, l'entrée 7.1 peut être l'entrée principale et l'entrée 7.2 peut être utilisée ou non.

Dans le véhicule de l'art antérieur, la face avant technique, qu'elle soit porteuse ou non, est propre à chaque modèle de voiture.

Selon l'invention, représentée sur les figures 2 et suivantes, on a intégré dans une seule pièce standardisée un guide d'air structurel à fonction de FAT, que viennent compléter des éléments modulaires de guide d'adaptation et d'équipements de FAT.

La figure 2 montre le guide d'air structurel standard ou plate-forme 10 en position de recevoir trois équipements modulaires de FAT. Le guide 10 est une pièce rigide sensiblement rectangulaire et d'une certaine épaisseur, par exemple réalisée en plastique moulé, avec éventuellement des renforcements ponctuels en plastique ou métalliques. Il comprend essentiellement :
- une zone principale 11 sous forme de cadre rectangulaire comportant une face avant 12 et une face arrière 13. La face avant 12 comporte des ouvertures traversantes 14, 15, 16, 17 de formes et tailles diverses pour le passage de l'air et destinées à recevoir à l'avant, comme on le verra plus loin, des guides d'air d'adaptation ou convergents. La face arrière 13 forme un caisson rectangulaire destiné à recevoir la valise de refroidissement comme on le verra également plus loin.
- une zone supérieure ou bordure 20 à structure de poutre en treillis, renforcée par une pluralité de cloisons verticales et obliques 21. Cette bordure 20 comporte aussi des zones de fixation pour des équipements modulaires de FAT 30, 31, 32.
- des zones de fixation 40 du guide d'air structurel à la caisse du véhicule, ici sous forme d'oreilles latérales de fixation.

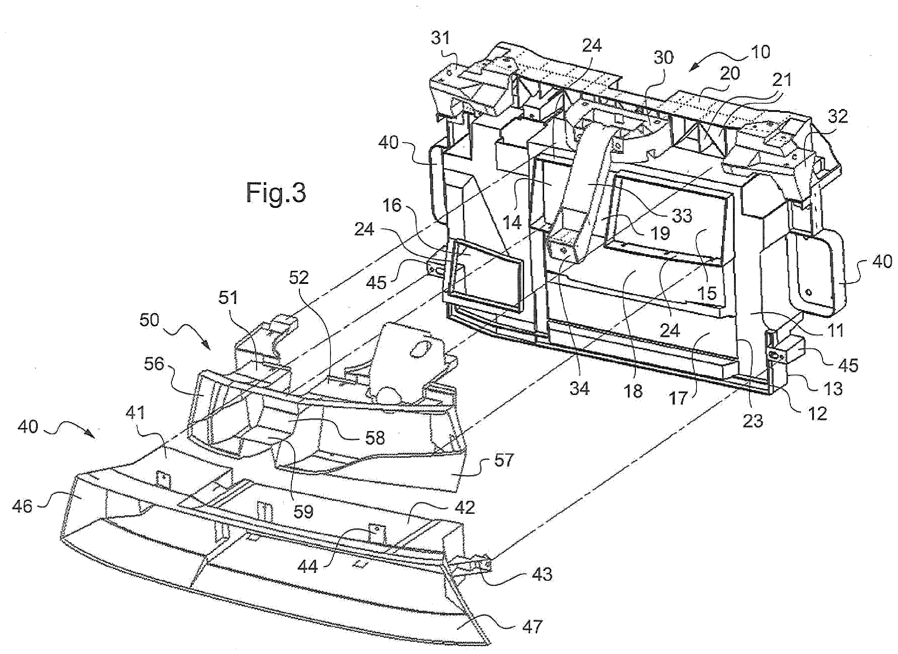

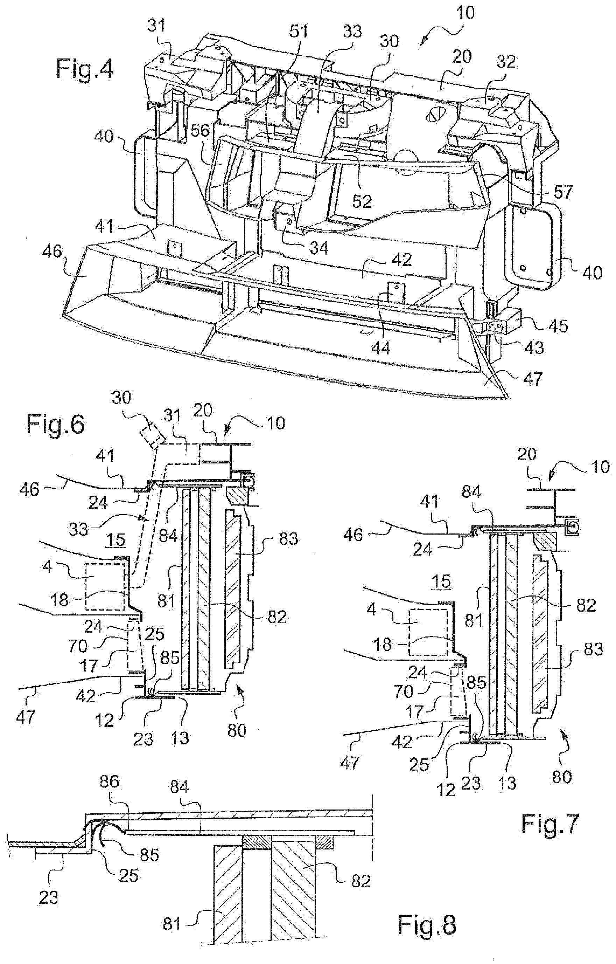

Dans le mode de réalisation représenté figure 2, la face avant 12 comporte un bandeau horizontal 18 correspondant à l'emplacement de la poutre de choc 4 qui se trouve juste devant après montage (cf. aussi figures 5, 6 et 7) et un bandeau médian vertical 19 correspondant au passage d'un jambage avant de liaison 33 de l'équipement 30. Les ouvertures 17, 18, 19 sont comprises dans un sous-cadre rectangulaire 23 correspondant sensiblement à la forme de la valise de refroidissement qui vient s'insérer derrière dans le caisson de réception. L'ouverture 16 peut être utilisée pour un autre équipement de refroidissement tel que le radiateur de suralimentation dit radiateur RAS d'un véhicule turbo. Chaque ouverture 14-17 peut être entourée d'une bordure 24 perpendiculaire à la face avant 12 du guide 10 (cf. aussi figures 6 et 7) permettant de favoriser le placement et l'étanchéité des guides d'adaptation adaptatifs 40, 50 qui seront placés à l'avant des ouvertures 14-17 (cf. fig. 3).

La figure 2 montre trois équipements de FAT 30, 31, et 32 destinés à venir se fixer respectivement au centre et aux extrémités de la bordure supérieure 20 du guide d'air 10. Chacun des ces accessoires correspond à une version spécifique de véhicule, au contraire du guide d'air 10 qui est standard : chaque accessoire est donc une interface adaptative entre le guide d'air standard et la carrosserie spécifique du véhicule. Ces accessoires peuvent notamment être des supports de butée de capot pour les accessoires latéraux 31 et 32 et, pour l'accessoire central 30, un support de serrure. Les accessoires 31 et 32 viennent verticalement s'insérer dans un logement adéquat de la bordure supérieure 20 par complémentarité de forme ; éventuellement un jeu de pions (par exemple sur la bordure) et de lumières (par exemple sur l'accessoire) permet de guider le montage, et de servir de détrompeur entre partie gauche et droite. La fixation se fait par exemple par vissage des accessoires 31, 32 sur la bordure 20. L'accessoire central 30 vient se fixer sur la bordure 20 par l'avant, avec là encore un jeu de formes complémentaires permettant guidage et maintien en position, avec fixation par vissage. L'accessoire central 30 comporte, vers l'avant et vers le bas, un jambage de liaison 30 qui peut venir se fixer sur la poutre de choc 4 grâce à une partie de fixation 34.

Sur la figure 3, on a représenté les accessoires 30, 31 et 32 en position fixée, et on a représenté en éclaté, en attente de fixation, les guides d'air adaptatifs ou convergents d'entrée spécifiques inférieur 40 et supérieur 50 qui conduisent l'air depuis les grilles de la carrosserie avant jusqu'au guide d'air standard 10. Le convergent inférieur 40 comprend deux caissons rigides 41, 42 destinés à se fixer sur les ouvertures 16 et 17 du guide d'air 10, en coopérant éventuellement pour l'étanchéité avec les bordures 24 desdites ouvertures. La fixation se fait au moyen de diverses pattes de fixation 43 ou 44 coopérant avec des zones de vissage telles que 45 sur le guide d'air 10 ou des zones de la poutre de choc 4. À l'avant des caissons rigides, une partie souple 46, 47 réalise l'application étanche des convergents sur la partie avant de carrosserie. Cette partie souple peut être unique pour les deux caissons rigides 41, 42 comme représenté, ou consister en deux guides souples. Ces pièces-là sont hautement spécifiques au véhicule équipé. De même le convergent spécifique supérieur 50 comprend d'une part des caissons rigides 51, 52 destinés à s'aboucher aux ouvertures 14, 15 ; ces caissons sont ici séparés par un pont rigide 58 destiné à laisser la place pour la jambe de liaison 33 de l'accessoire 30. Ces éléments rigides 51, 52, 58 sont prolongés vers l'avant par des éléments souples 56, 57, 59 destinés à s'adapter exactement à la forme de la carrosserie à cet endroit.

La figure 4 représente ces mêmes éléments une fois montés sur le guide d'air 10.

La figure 5 représente en éclaté l'implantation du guide d'air de l'invention sur la caisse. On y reconnaît les longerons supérieurs 2 dont l'extrémité porte une bride rectangulaire de fixation 60 sur laquelle va venir se fixer l'oreille de fixation 40 du guide d'air 10. Les extrémités avant des longerons supérieurs 2 sont reliées par des pendeloques 61 à des longeronnets inférieurs 62 à l'avant desquels sont fixés des dispositifs d'amortissement de choc 63 et la barre de choc 4 et entre lesquels est fixée la traverse sous radiateur 64. Le guide d'air standard 10, muni de ses équipements spécifiques 30, 31, 32 d'une part, 40, 50 d'autre part, est donc fixé sur les longerons 2 et aussi éventuellement sur la poutre de choc 4 comme on l'a vu précédemment. La figure 5 représente aussi un cadre à volet orientables 70 qui peut se mettre, en option, dans l'ouverture 17 du guide d'air (on le voit aussi en pointillés sur les figures 6 et 7).

Les figures 6 et 7 permettent de voir en coupe transversale l'agencement de la valise de refroidissement 80 dans deux positions qu'elle peut prendre selon l'invention dans le logement en caisson de réception formé à la face arrière 13 du guide d'air 10 dans le sous-cadre 23 qui est situé au-dessous de la bordure supérieure 20 servant de poutre. On a représenté sur les figures 6 et 7 les parties rigides 41, 42 et souples 46, 47 des convergents d'entrée d'air venant se fixer en face des ouvertures 15 et 17. On a représenté en pointillés dans l'ouverture 17 le panneau de volets orientables 70. On a également représenté en pointillés l'accessoire central 30 avec la jambe 33 de liaison à la poutre de choc 4 qu'on a également esquissé entre et à l'avant des ouvertures 15 et 17. L'accessoire 30 peut notamment recevoir la serrure de capot esquissée en 36. Ces derniers éléments n'ont pas été repris sur la figure 7 pour alléger le dessin.

Les figures 6 et 7 montrent la valise de refroidissement 80 composée par exemple de l'empilage d'un condenseur 81, d'un radiateur 82 et d'un groupe moto-ventilateur (hélice) 83. Cet empilage est entouré d'une enveloppe 84 en matière plastique dont le bord avant est conformé en lèvre articulée 85 grâce à un amincissement de matière 86 et à une forme arrondie adaptée de l'extrémité. La face arrière 13 du cadre 23 forme un caisson de réception de la valise 80 suffisamment profond pour accueillir la valise d'une manière plus ou moins enfoncée dans le caisson, comme on va le voir plus loin. Les dimensions de l'enveloppe 84 sont choisies pour que la lèvre d'extrémité 85 vienne buter sur un épaulement périphérique 25 formé au fond du caisson de réception, quelle que soit la position de la valise (avancée ou reculée, cf. plus loin),. En venant buter contre cette épaulement, la lèvre 85 se positionne automatiquement dans une position favorisant l'étanchéité à l'air, sous l'effet de la pression d'air qui plaque la lèvre 85 contre l'épaulement 25. Du fait que la lèvre d'étanchéité 85 est ainsi positionnée à l'avant de l'enveloppe, cela limite la hauteur de l'assemblage au niveau de la valise de refroidissement 80.

La valise de refroidissement 80 peut être fixée de manière autonome par des moyens non représentés à des éléments de la caisse du véhicule (notamment la traverse sous radiateur 64), ou bien peut être fixée au guide d'air 10 qui dans ce cas joue un rôle de FAT autoporteuse.

Dans la figure 6, la valise de refroidissement a été représentée dans une position reculée, laissant un espace d'environ 45 mm entre l'avant de la valise 80 et les éléments plus en avant tels que la poutre de choc 4. Dans cette position reculée, la valise de refroidissement est moins sensible aux chocs, notamment au test de choc dit « Danner ».

Si l'on ne dispose pas, compte tenu de la configuration plus encombrante du moteur, de l'espace nécessaire pour avoir cette position reculée, on peut mettre la valise de refroidissement 80 dans une position avancée, comme montré sur la figure 7.

## Revendications

1. Ensemble comportant un guide d'air structurel et une valise de refroidissement, le guide d'air structurel étant destiné à être intégré à l'avant d'un véhicule dans un compartiment moteur dudit véhicule, derrière au moins une ouverture d'aération d'une façade avant du véhicule, le guide d'air (10) étant sous forme d'une structure sensiblement rectangulaire comprenant notamment une face avant (12), une face arrière (13), et une bordure supérieure (20), ladite structure intégrant au moins un radiateur et comprenant des moyens de fixation (40) à la structure du véhicule, la face avant (12) comprenant une zone de fixation (14-17) destinée à la fixation d'au moins un module de guidage d'air adaptatif (40, 50) apte à conduire l'air depuis l'ouverture d'aération jusqu'à ladite face avant (12), la face arrière (13) formant un logement de réception de la valise de refroidissement (80) comprenant au moins ledit radiateur (82), la valise (80) étant équipée de moyens d'étanchéité (85) coopérant avec le logement de réception, la bordure supérieure (20) comprenant au moins une zone de fixation de modules d'équipements (30, 31, 32) de face avant technique, le logement de réception de la valise (80) de refroidissement situé à l'arrière du guide d'air (10) structurel est apte à recevoir la valise dans l'une ou l'autre d'au moins deux positions, respectivement avancée ou reculée, **caractérisé en ce que** la valise (80) comporte une enveloppe ou manchon (84) en matière plastique dont le bord avant est conformé en joint, notamment à lèvre (85) articulée, une surface intérieure du logement de réception comporte un épaulement périphérique (25) coopérant avec le joint (85) porté par la valise de refroidissement (80) pour réaliser l'étanchéité quelle que soit la position de la valise.

2. Ensemble selon la revendication 1, **caractérisé en ce que** la bordure supérieure (20) est conformée en poutre transversale.

3. Ensemble d'air structurel selon la revendication 1 ou 2, **caractérisé en ce que** la zone de fixation prévue sur la bordure supérieure du guide d'air structurel comprend plusieurs zones d'accueil et de fixation de modules d'équipement (30, 31, 32), notamment au milieu et aux extrémités de la bordure.

4. Ensemble selon la revendication 3, **caractérisé en ce que** les modules d'équipement (30, 31, 32) se fixent par indexation et vissage.

5. Ensemble selon la revendication 1 à 4, **caractérisé en ce qu'**il comprend au moins un module de guidage d'air adaptatif (40, 50) constitué d'au moins un caisson rigide (41, 42, 51, 52) fixé sur le guide d'air structurel (10) et comportant vers l'avant un bord souple périphérique (46, 47, 56, 57) assurant le contact avec le bouclier avant du véhicule.

6. Véhicule automobile **caractérisé en ce qu'**il comporte un ensemble selon l'une quelconque des revendications précédentes.

7. Gamme d'au moins deux véhicules différents selon la revendication 6, **caractérisée par** un guide d'air structurel (10) identique mais au moins un module de guidage d'air adaptatif (40, 50) et/ou un module d'équipement de face avant technique différent (30, 31, 32).

## Patentansprüche

1. Anordnung, aufweisend eine strukturelle Luftführung und eine Kühleinheit, wobei die strukturelle Luftführung dazu bestimmt ist, an der Front eines Fahrzeugs in einen Motorraum des Fahrzeugs hinter mindestens einer Belüftungsöffnung einer Front des Fahrzeugs eingebaut zu werden, wobei die Luftführung (10) die Form einer im Wesentlichen rechteckigen Struktur hat, die insbesondere eine Vorderseite (12), eine Rückseite (13) und eine obere Einfassung (20) umfasst, wobei die Struktur mindestens einen Kühler beinhaltet und Befestigungsmittel (40) zum Befestigen an der Struktur des Fahrzeugs umfasst, wobei die Vorderseite (12) einen Befestigungsbereich (14-17) umfasst, der zum Befestigen mindestens eines adaptiven Luftführungsmoduls (40, 50) bestimmt ist, das geeignet ist, die Luft von der Belüftungsöffnung bis zu der Vorderseite (12) zu führen, wobei die Rückseite (13) eine Aufnahme für die Kühleinheit (80) bildet, die zumindest den Kühler (82) umfasst, wobei die Einheit (80) mit Dichtmitteln (85) ausgestattet ist, die mit der Aufnahme zusammenwirken, wobei die obere Einfassung (20) mindestens einen Befestigungsbereich zum Befestigen von Ausrüstungsmodulen (30, 31, 32) der technischen Vorderseite umfasst, wobei die hinter der strukturellen Luftführung (10) gelegene Aufnahme für die Kühleinheit (80) geeignet ist, die Einheit in der einen oder der anderen von mindestens zwei Positionen, vorgeschoben bzw. zurückversetzt, aufzunehmen, **dadurch gekennzeichnet, dass** die Einheit (80) eine Hülle oder Manschette (84) aus Kunststoff aufweist, deren vorderer Rand als Dichtung ausgebildet ist, insbesondere als angelenkte Lippendichtung (85), wobei eine Innenfläche der Aufnahme eine umfängliche Schulter (25) aufweist, die mit der von der Kühleinheit (80) getragenen Dichtung (85) zusammenwirkt, um unabhängig von der Position der Einheit die Abdichtung auszuführen.

2. Anordnung nach Anspruch 1, **dadurch gekennzeichnet, dass** die obere Einfassung (20) als Träger ausgebildet ist.

3. Strukturelle Luftanordnung nach Anspruch 1 oder 2, **dadurch gekennzeichnet, dass** der an der oberen Einfassung der strukturellen Luftführung vorgesehene Befestigungsbereich mehrere Bereiche zum Aufnehmen und Befestigen von Ausrüstungsmodulen (30, 31, 32) umfasst, insbesondere in der Mitte und an den Enden der Einfassung.

4. Anordnung nach Anspruch 3, **dadurch gekennzeichnet, dass** die Ausrüstungsmodule (30, 31, 32) durch Indexierung und Schrauben befestigt werden.

5. Anordnung nach Anspruch 1 bis 4, **dadurch gekennzeichnet, dass** sie mindestens ein adaptives Luftführungsmodul (40, 50) umfasst, das aus mindestens einem starren Kasten (41, 42, 51, 52) besteht, der an der strukturellen Luftführung (10) befestigt ist und nach vorne hin einen flexiblen umfänglichen Rand (46, 47, 56, 57) aufweist, der den Kontakt mit der vorderen Schürze des Fahrzeugs gewährleistet.

6. Kraftfahrzeug, **dadurch gekennzeichnet, dass** es eine Anordnung nach einem der vorhergehenden Ansprüche aufweist.

7. Produktprogramm aus mindestens zwei unterschiedlichen Fahrzeugen nach Anspruch 6, das durch eine identische strukturelle Luftführung (10), aber mindestens ein unterschiedliches adaptives Luftführungsmodul (40, 50) und/oder ein unterschiedliches Ausrüstungsmodul der technischen Vorderseite (30, 31, 32) gekennzeichnet ist.

## Claims

1. Assembly comprising a structural air guide and a cooling kit, the structural air guide being intended to be incorporated into the front of a vehicle in an engine compartment of said vehicle, behind at least one ventilating opening of a front face of the vehicle, the air guide (10) being in the form of a substantially rectangular structure comprising in particular a front surface (12), a rear surface (13), and an upper border (20), said structure incorporating at least one radiator and comprising means (40) for fastening to the structure of the vehicle, the front surface (12) comprising a fastening zone (14-17) intended for fastening at least one adaptive air guiding module (40, 50) able to conduct the air from the ventilating opening to said front surface (12), the rear surface (13) forming a housing for receiving the cooling kit (80) comprising at least said radiator (82), the kit (80) being equipped with sealing means (85) cooperating with the receiving housing, the upper border (20) comprising at least one zone for fastening technical front surface equipment modules (30, 31, 32), the housing for receiving the cooling kit (80), situated at the rear of the structural air guide (10), being able to receive the kit in one or the other of at least two positions, respectively a forward position or a rearward position, **characterized in that** the kit (80) comprises a plastic envelope or sleeve (84) whose front edge is configured as a seal, in particular with an articulated lip (85), an inner surface of the receiving housing comprising a peripheral shoulder (25) cooperating with the seal (85) borne by the cooling kit (80) to provide sealing whatever the position of the kit.

2. Assembly according to Claim 1, **characterized in that** the upper border (20) is configured as a transverse beam.

3. Structural air assembly according to Claim 1 or 2, **characterized in that** the fastening zone provided on the upper border of the structural air guide comprises a plurality of zones for accommodating and for fastening equipment modules (30, 31, 32), in particular at the center and at the ends of the border.

4. Assembly according to Claim 3, **characterized in that** the equipment modules (30, 31, 32) are fastened by indexing and screwing.

5. Assembly according to Claims 1 to 4, **characterized in that** it comprises at least one adaptive air guiding module (40, 50) consisting of at least one rigid box section (41, 42, 51, 52) fastened to the structural air guide (10) and comprising toward the front a peripheral flexible edge (46, 47, 56, 57) providing contact with the front bumper of the vehicle.

6. Motor vehicle, **characterized in that** it comprises an assembly according to any one of the preceding claims.

7. Range of at least two different vehicles according to Claim 6, **characterized by** an identical structural air guide (10) but at least one different adaptive air guiding module (40, 50) and/or a different technical front surface equipment module (30, 31, 32).
